# EUROPEAN PATENT APPLICATION

(11) **EP 2 141 524 A1**
(43) Date of publication of application: **06.01.2010**
(21) Application number: 08776985.7
(22) Date of filing: 29.05.2008
(51) Int. Cl.: G02B 6/122, G02B 6/13

(54) **OPTICAL AXIS CONVERTING ELEMENT AND METHOD FOR MANUFACTURING THE SAME**

(30) Priority: 30.05.2007 JP 2007143033
(71) Applicant: Central Glass Company, Limited, Yamaguchi 755-0001 (JP)
(72) Inventor: The designation of the inventor has not yet been filed
(74) Representative: Manitz, Finsterwald & Partner GbR
(86) International application number: PCT/JP2008/059923
(87) International publication number: WO 2008/146882

(57) **Abstract**

Disclosed in a multichannel optical waveguide device **characterized by** comprising: a structure including a cladding and having a light-incident end surface, a light-outgoing end surface, and a plurality of flat reflection surfaces located parallel with each other; and L-shaped cores embedded in the cladding, the L-shaped cores being three-dimensionally arranged parallel with each other in m rows and n columns (where m and n are 2 or more), each L-shaped core having end faces which are exposed respectively to the light-incident end surface and the light-outgoing end surface, m number of the L-shaped cores in each column guiding light from the light-incident end surface to the light-outgoing end surface by changing direction of light on n number of the flat reflection surfaces, wherein an interval between the two adjacent cores on the light-incoming end surface is different from an interval between the two adjacent cores on the light-outgoing end surface, the two adjacent cores on the light-incoming end surface respectively corresponding to the two adjacent cores on the light-outgoing end surface.

## Description

### TECHNICAL FIELD

This invention relates to a structure of an optical path changing device for connecting photoelectric conversion elements and optical waveguides with a high efficiency, and a production method thereof, the photoelectric conversion devices being two-dimensionally arranged to realize an optical high speed transmission and a high density packaging, the optical waveguides including cores which are two-dimensionally arranged and have an interval different from an interval of the arranged photoelectric conversion elements for the purpose of improving a flexibility and a packaging density.

### BACKGROUND ART

As optical communication technology penetrates as a basic technology for information communication systems, the importance of optical interconnection is increased more and more as an elemental technology for optical network from the viewpoint of its high speed transmissibility. Its application spreads from the field of super computers and the field of portable apparatuses. After this, it is supposed that requirements not only for the high speed transmissibility but also for increasing the density of packaging and lowering cost are further increased.

A high speed transmission can be made in optical interconnection where arrayed photoelectric conversion elements of a vertical cavity surface emitting laser, a photo acceptance unit or the like are connected with them with the optical waveguides or optical fibers provided with both lens and mirror. Therefore, studies on the optical interconnection are extensively in progress. Particularly in case that the optical waveguides are used as transmission channels for light, the interval of cores optionally selectable, and therefore freedom in packaging is high. Particularly in the field of the portable apparatuses, a flexibility is necessary for optical waveguide sections so that a high flexibility is required for the optical waveguides themselves. Accordingly, in general, optical waveguides formed of resin, such as resinous optical waveguides formed, for example, of fluorinated polyimide resin, deuterated polysiloxane, epoxy resin, perfluorinated alicyclic resin, acrylic resin, silicone resin and the like are used.

Recently, in order to make effective the features of these photoelectric conversion elements and the resinous optical waveguides, a multichannel optical path changing device is proposed to effectively connect two-dimensionally arranged photoelectric conversion devices and optical waveguides having two-dimensionally arranged cores. For example, it is proposed that a reflection surface of a single plane is provided after intersecting optical waveguides are adhered to each other (see Patent Reference 1). This makes it possible to accomplish a high speed transmission without using lens and the like which are disadvantageous for a high density packaging, because a continuous optical waveguide is formed from a core end face to the other core end face.
Patent Reference 1: Japanese Patent Provisional Publication No. 2003-315578

### DISCLOSURE OF INVENTION

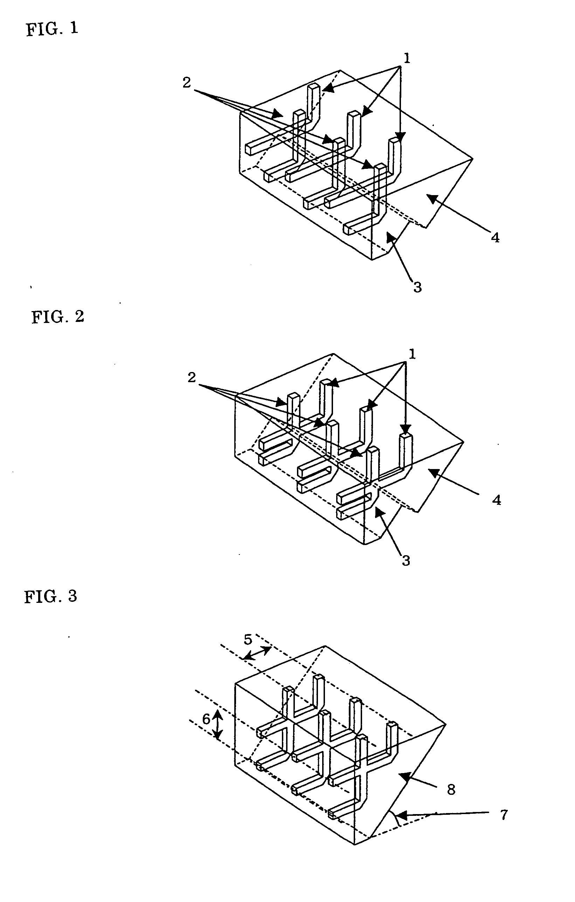

Fig. 3 shows a 3 rows and 2 columns multichannel optical waveguide device according to this conventional technique. In case that the highest effective optical changing angle is 90° in the conventional technique, a column interval 5 at a light-incident end surface are equal to a column interval 6 at a light-outgoing end surface, so that joining cannot be made between photoelectric conversion elements arranged generally with a pitch of 250 µm or larger and optical waveguides designed to have a core interval of less than 250 µm in a thickness direction for the purpose of being thinned to raise a density and increase a flexibility. Accordingly, there is a limit in compatibility between a flexibility and a density-increasing. Additionally, in this convention technique, a reflection point is formed by a single plane 8, and therefore the locational precision of cores are directly reflected in the optical characteristics of the optical path changing device, which is also a large problem in production.

According to the present invention, a multichannel optical waveguide device is provided, the multichannel optical waveguide device being characterized by comprising: a structure including a cladding and having a light-incident end surface, a light-outgoing end surface, and a plurality of flat reflection surfaces located parallel with each other; and L-shaped cores embedded in the cladding, the L-shaped cores being three-dimensionally arranged parallel with each other in m rows and n columns (where m and n are 2 or more), each L-shaped core having end faces which are exposed respectively to the light-incident end surface and the light-outgoing end surface, m number of the L-shaped cores in each column guiding light from the light-incident end surface to the light-outgoing end surface by changing direction of light on n number of the flat reflection surfaces, wherein an interval between the two adjacent cores on the light-incoming end surface is different from an interval between the two adjacent cores on the light-outgoing end surface, the two adjacent cores on the light-incoming end surface respectively corresponding to the two adjacent cores on the light-outgoing end surface.

The above-mentioned multichannel optical waveguide device may be **characterized in that** the direction of light is changed at an optical path changing angle of 90° on each reflection surface.

Additionally, the above-mentioned multichannel optical waveguide device may be **characterized in that** the core end faces for a column and the core end faces for another column are offset from each other so as to be arranged staggered on the light-incident end surface and the light-outgoing end surface.

Additionally, the above-mentioned multichannel optical waveguide device may be **characterized in that** n number of the L-shaped cores at each row are arranged on a plane perpendicular to each reflection surface and intersect each other.

Additionally, the above-mentioned multichannel optical waveguide device may be **characterized in that** a metallic pattern is formed at least one of the light-outgoing end surface and the light-incident end surface.

Additionally, the above-mentioned multichannel optical waveguide device may be characterized by further comprising another multichannel optical waveguide device which is in mirror image relationship to the multichannel optical waveguide device, the multichannel optical waveguide devices being connected with each other by waveguides whose cores are two-dimensionally arranged.

Further, the above-mentioned multichannel optical waveguide device may be characterized by further comprising another multichannel optical waveguide, the multichannel optical waveguide devices being connected with each other by waveguides whose cores are two-dimensionally arranged.

Furthermore, according to the present invention, a method of producing a multichannel optical waveguide device, characterized by comprising a step of producing reverse U-shaped or reverse L-shaped cores which are three-dimensionally arranged on a temporary substrate, and a step of forming a reflection surface at each of m rows.

### BRIEF DESCRIPTON OF DRAWINGS

[Fig. 1] Fig. 1 is an illustration showing an outline of a 3 row and 2 columns multichannel optical path changing device in which L-shaped cores are three-dimensionally arranged staggered.
[Fig. 2] Fig. 2 is an illustration showing an outline of a 3 row and 2 columns multichannel optical path changing device in which intersecting L-shaped cores are three-dimensionally arranged.
[Fig. 3] Fig. 3 is a illustration showing a comparative example, as a conventional technique, of a multichannel optical path changing device having three-dimensionally arranged L-shaped cores so that optical path changing is made by a reflection surface of a single plane.
[Fig. 4] Fig. 4 is an illustration showing an outline in which two 3 rows and 1 column arrayed vertical cavity surface emitting elements are mounted on a multichannel optical path changing device in which a metallic electrode pattern is formed, according to the present invention.
[Fig. 5] Fig. 5 is an illustration showing an outline in which a 3 rows and 2 columns arrayed vertical cavity surface emitting elements and a 3 rows and 2 columns arrayed photo acceptance elements are mounted on a 3 rows and 2 columns multichannel optical path changing device in which U-shaped cores are three-dimensionally arranged, according to the present invention.
[Fig. 6] Fig. 6 is an illustration showing an example of a production process for a multichannel optical path changing device in which L-shaped cores are three-dimensionally arranged staggered, according to the present invention.
[Fig. 7] Fig. 7 is an illustration showing an example of a production process for a multichannel optical path changing device in which L-shaped cores intersecting at right angles are three-dimensionally arranged, according to the present invention.

### DETAILED DESCRIPTION

According to the present invention, for a multichannel optical path changing device for joining photoelectric conversion elements arrayed in m rows and n columns and optical waveguides whose cores are arranged in m rows and n columns, the joining is made possible even in case that the row interval of the arrayed photoelectric conversion elements and the row interval of the optical waveguides are different from each other, thereby achieving a flexibility and a high density packaging which are impossible in conventional techniques while providing a production method provided with a production easiness.

This invention can be used not only for communication systems in the field of optical communication but also for evaluation, measurement and the like which are in the application field of optical transmission.

This invention provides a multichannel optical waveguide device which comprises a structure including a cladding and having a light-incident end surface, a light-outgoing end surface, and a plurality of flat reflection surfaces located parallel with each other; and L-shaped cores embedded in the cladding, the L-shaped cores being three-dimensionally arranged parallel with each other in m rows and n columns (where m and n are 2 or more), each L-shaped core having end faces which are exposed respectively to the light-incident end surface and the light-outgoing end surface, m number of the L-shaped cores in each column guiding light from the light-incident end surface to the light-outgoing end surface by changing direction of light on n number of the flat reflection surfaces, wherein an interval between the two adjacent cores on the light-incoming end surface is different from an interval between the two adjacent cores on the light-outgoing end surface, the two adjacent cores on the light-incoming end surface respectively corresponding to the two adjacent cores on the light-outgoing end surface, thereby making it possible to be connected to optical waveguides which are improved in packaging density and flexibility

As examples of the present invention, a multichannel optical waveguide device **characterized in that** the core end faces in 3 rows and 2 columns at the light-incident end surface and the light-outgoing end surface are offset and arranged staggered is shown in Fig. 1; and additionally, a 3 rows and 2 columns multichannel optical waveguide device **characterized in that** two L-shaped cores at each row are arranged on a plane perpendicular to each reflection surface and intersect each other is shown in Fig. 2.

A point of the present invention resides in the fact that its joining with resinous optical waveguides whose core interval in a thickness direction are decreased, for example, for the purpose of further improving a flexibility and whose thinned cores are two-dimensionally arranged can be made possible regardless of an arrangement interval of photoelectric conversion elements even in case of 90° light path changing which is most effective for a high packaging, and additionally provides a production method which is provided with both an optical characteristics high in uniformity and a production easiness because a reflection surface is formed for each column while its formation is made in block on a wafer.

A 3 rows and 2 columns multichannel optical waveguide device according to a conventional technique is shown in Fig. 3. In case of taking a light path changing angle of 90° which is the highest in efficiency in the conventional technique, a column interval 5 at the light-incident end surface unavoidably becomes equal to a column interval 6 at the light-outgoing end surface, so that joining is not possible when the arrangement intervals of the photoelectric conversion elements and the optical waveguides are different from each other. As a result, there is a limit in compatibility between improving a flexibility and increasing a density. Additionally, since reflection points are formed by a single plane 8 in this conventional technique, there is such a problem that the locational precision of cores are directly reflected in the optical characteristics of the optical path changing device.

To the contrary, according to the present invention, a production can be possible in a state where the row interval at the light-incident end surface is smaller than the row interval at the light-outgoing end surface, for example, as shown in Fig. 2. By this, joining can be made possible between photoelectric conversion elements which are generally large in core interval and resinous optical waveguides whose core interval in a thickness direction are decreased, for example, for the purpose of further improving a flexibility and whose thinned cores are two-dimensionally arranged. Additionally, the reflection surfaces serving as intersecting points of vertical and horizontal optical waveguides to a wafer plane are planes 3, 4 which are different from each other and for respective columns, the locational precision for the reflection surfaces are improved as compared with a production with a single plane, thereby making it possible to raise the performance of the multichannel optical waveguides.

Additionally, differently from the conventional technique, since it is formed in block on a wafer, a large cost lowering is realized. Additionally, the L-shaped cores of the multichannel optical waveguides may be arranged staggered or intersecting each other.

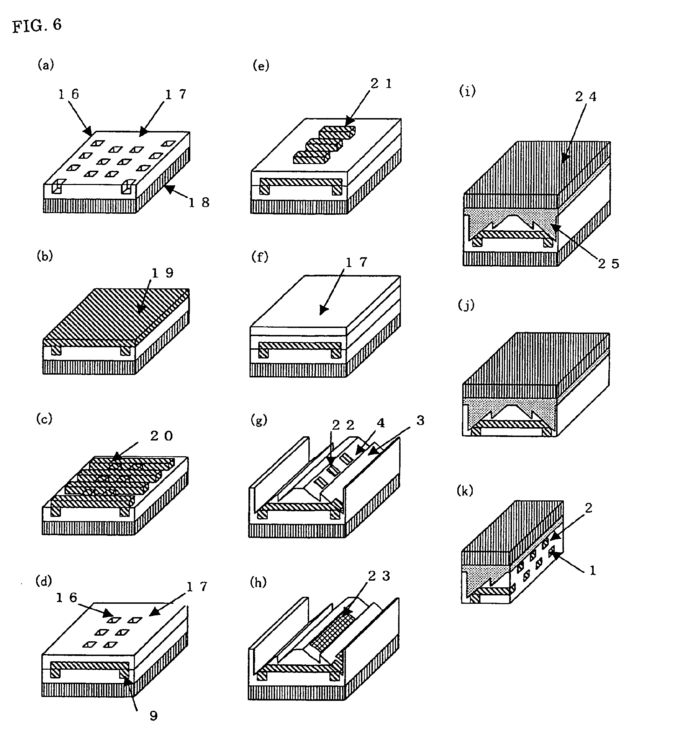

Fig. 6 is an illustration for explaining an example of a production process of the multichannel optical path changing device whose cores are arranged staggered in 3 rows and 2 columns. While it is actually produced in the state of a wafer, a device section is shown enlarged and a dummy core is shown exposed at the front side for the purpose of easiness of illustration, in the figure.

First, at (a), holes are formed staggered at a substrate which is prepared by forming a clad material as a film on a temporary substrate under the techniques of a lithography and a Reactive Ion Etching (RIE). It is to be noted that the column interval and row interval in the hole pattern are the same. At (b) and (c), a patterning is carried out by a selection exposure after a photosensitive core material is coated. The core interval of the optical waveguides parallel with the wafer plane is made smaller than that in the hole pattern at (a) by adjusting the thickness of an over-cladding.

Subsequently, after a reflection surface is formed for each column and a film formation of a metal is made on the reflection surface, a real substrate is adhered onto it thereby obtaining one shown at (i). Thereafter, removing the temporary substrate and exposing the core end faces are carried out by grinding.

Chip formation is made so as to form certain L-shaped optical waveguides after metallic electrodes are formed if necessary, thereby making it possible to produce a multichannel optical waveguide device characterized by comprising a structure including a cladding and having a light-incident end surface, a light-outgoing end surface, and a plurality of flat reflection surfaces located parallel with each other; and L-shaped cores embedded in the cladding, the L-shaped cores being three-dimensionally arranged parallel with each other in m rows and n columns (where m and n are 2 or more), each L-shaped core having end faces which are exposed respectively to the light-incident end surface and the light-outgoing end surface, m number of the L-shaped cores in each column guiding light from the light-incident end surface to the light-outgoing end surface by changing direction of light on n number of the flat reflection surface, wherein an interval between the two adjacent cores on the light-incoming end surface is different from an interval between the two adjacent cores on the light-outgoing end surface, the two adjacent cores on the light-incoming end surface respectively corresponding to the two adjacent cores on the light-outgoing end surface, and the core end faces at one column and those at another column are offset from each other at the light-indent end surface and the light-outgoing end surface so as to be arranged staggered.

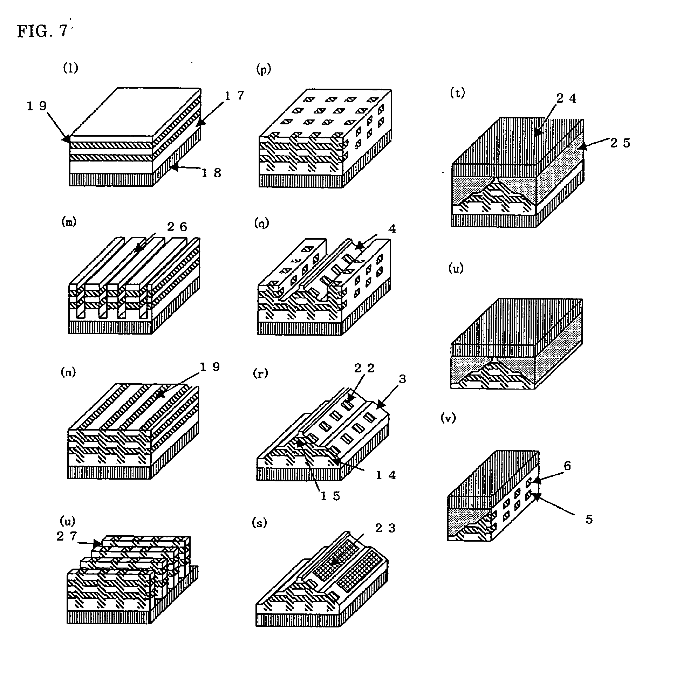

Fig. 7 shows, as another embodiment, a production process for a 3 rows and 2 columns multichannel optical path changing device **characterized in that** n number of L-shaped cores in each row are arranged on a plane perpendicular to each reflection surface and intersect each other.

Similarly to the example in Fig. 6, while it is actually produced in the state of a wafer, a device section is shown enlarged and a dummy core is shown exposed at the front side for the purpose of easiness of illustration, in the figure.

At (1), a cladding, a core, a cladding, a core and a cladding are film-formed on a temporary substrate to have respective certain thicknesses. At (m) and (n), grooves having the same width as that of cores are formed to have an interval larger than the core interval, and the grooves are filled with a core material, followed by hardening the core material. At (u) and (p), grooves are formed at the opposite sides of a portion which finally becomes a core, and the grooves are filled with a cladding. At (q) and (r), a reflection surface is formed for each column thereby exposing the cores, so that reverse U-shaped optical waveguides are three-dimensionally arranged on the temporary substrate. The exposed cores are covered with a metal thereby producing one shown at (s).

Thereafter, a real substrate is adhered onto the one thereby producing one shown at (t), and then removing the temporary substrate and exposing the core end faces are carried out by grinding.

Chip formation is made so as to form certain L-shaped optical waveguides after metallic electrodes are formed if necessary, thereby making it possible to produce a multichannel optical waveguide device characterized by including a structure constituted by a light-incident end surface, a light-outgoing end surface and a plurality of reflection surfaces which are located parallel with each other, in which the end faces of L-shaped cores which are embedded in a cladding and three-dimensionally arranged parallel with each other in m rows and n columns (where m and n is 2 or more) are exposed to the light-incident end surface and the light-outgoing end surface; m number of L-shaped cores in each column guides light from the light-incident end surface to the light-outgoing end surface by changing the direction of light with n number of the flat reflection surfaces; the core interval of the two adjacent cores at the light-incident end surface and the core interval of the corresponding two cores at the light-outgoing end surface are different from each other; the core end faces at the light-indent end surface and the light-outgoing end surface are; and n number of L-shaped cores in each row are arranged on a plane perpendicular to each reflection surface and intersect each other.

Each of the multichannel optical waveguide channels shown in Fig. 6 and Fig. 7 is constituted by a light-incident end surface, a light-outgoing end surface and a plurality of reflection surfaces which are located parallel with each other, and has a structure where light is guided from the light-incident end surface to the light-outgoing end surface by changing the direction of light with n number of flat mirror surfaces for each column, so that the interval of the adjacent two columns at the light-incident end surface is made different from the interval of the corresponding two columns at the light-outgoing end surface thereby rendering it possible to make compatible a high density characteristic and a flexibility.

Additionally, a reflection surface is formed for each column, and therefore both an optical characteristics high in uniformity and a production easiness are provided.

A feature of the production process disclosed with the present invention resides in producing the U-shaped optical waveguides through the three-dimensionally arranged substrate. This makes it possible to produce the multichannel optical waveguide device in block on the substrate and in mass production, and additionally makes it possible to evaluate it in block in the state of a substrate because the optical characteristics of U-shaped optical waveguides including the reflection surfaces for light can be evaluated by measuring light which outgoes from the same plane as that to which the light enters upon reflection at the two reflection surfaces when the light enters one of core end faces in the state of the substrate thereby achieving a large cost reduction as compared with evaluation for an individual chip in conventional techniques.

Although it is possible to produce the final mode of either one of the reverse L-shaped and reverse U-shaped optical waveguides on the temporary substrate, production of the reverse U-shaped ones is more preferable because evaluation of the optical characteristics cannot be made on the substrate in case of the reverse L-shaped ones.

The production method disclosed with the present invention is sufficient to include a step of producing three-dimensionally arranged reverse U-shaped and reverse L-shaped cores on the temporary substrate, and a step of forming a reflection surface for each of m rows. For example, a method for using a metal die, a method for using a dicing saw, a method for employing a reactive etching apparatus, a direct exposure method in which photosensitivity is provided to an optical waveguide material, and a photobleaching method are supposed as the production method of the optical waveguides.

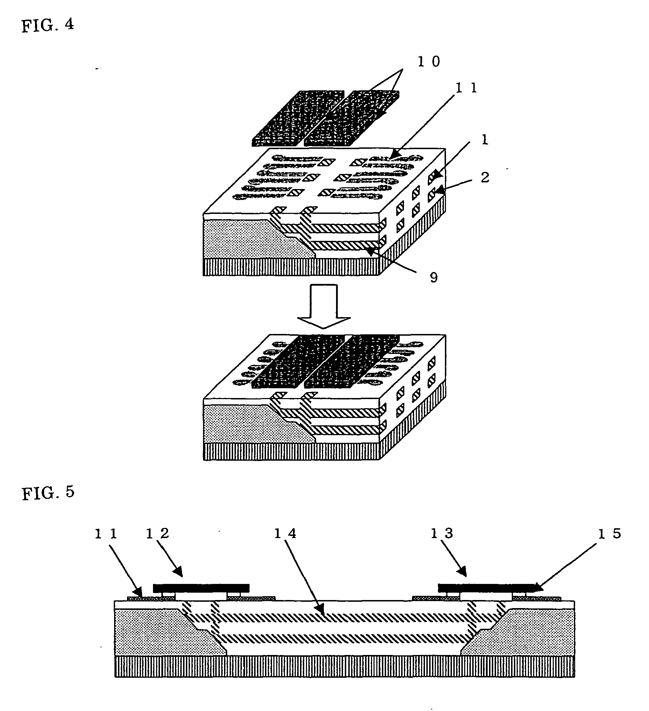

Fig. 4 is a schematic illustration of an embodiment in which two of 3 rows and 1 column arrayed vertical cavity surface emitting elements are mounted on the 3 rows and 2 columns multichannel optical waveguide device of the embodiment 2 in which an electrode pattern is formed. It is to be noted that a dummy core is provided in Fig. 4 for the purpose of easiness of explanation.

If a large tolerance is provided for packaging of the arrayed vertical cavity surface emitting elements, it is made possible to join the cores whose core column interval is small with the two-dimensionally arranged optical waveguides regardless of their intervals, because a plurality of reflection surfaces are provided for each column.

Additionally, each L-shaped core is continuous while the cores are exposed to each of the light-incident and light-outgoing end surfaces, and therefore a high joining efficiency is attained without requiring lens and the like. The 3 rows and 1 column vertical cavity surface emitting elements are exemplified in the figure; however, a 3 rows and 2 columns or the like two-dimensionally arranged vertical cavity surface emitting elements may be used.

Fig. 5 is a schematic illustration of an embodiment which is observed from the side surface, in which arrayed vertical cavity surface emitting elements are mounted on one core end face while arrayed photo acceptance elements are mounted on the other core end face, for one which is chip-formed in the state of the U-shaped optical waveguides after electrodes and solder bumps are formed in a product shown at (v).

Packaging of the photoelectric conversion elements are carried out under a passive packaging by a bonding apparatus. In this embodiment, light emitted from the arrayed vertical cavity surface emitting element makes its optical path changing by two times and propagates through continuing cores, and therefore an insertion loss is low while a crosstalk is suppressed low.

When a high speed transmission of light was confirmed upon connecting it to a driver and a receiver by wire bonding, it was confirmed that it had a good eye pattern even at 10 Gbps and therefore confirmed that it achieved a high transmission speed.

The optical waveguides laminated between the reflection surfaces can be thinned regardless of the interval of the respective channels of the vertical cavity surface emitting elements and the photo acceptance elements, thereby providing an optical two-way transmission module which is provided with both a high flexibility and a high density packaging.

Hereinafter, the present invention will be discussed with reference to Examples. It is to be noted that the present invention is not limited to Examples.

### EXAMPLE 1

Epoxy resin as a cladding material was coated as a film on a glass substrate having a thickness of 1 mm. Coating was accomplished by a spin coat process, and the executed cladding material had a thickness of 200 µm.

Thereafter, a masking material was coated as a film on the cladding material, and then a patterning was carried out by a photo-lithography. Al was used as the masking material, and O₂ gas was flown to etch parts which were not protected with a masking layer (O₂-RIE), a hole pattern having holes arranged staggered was formed at the cladding material, each hole having an area of 50 x 50 µm and a depth of 80 µm, the distance of the rows of the holes being 250 µm while the distance of the columns of the holes being 125 µm.

Epoxy resin as a core material having a negative photosensitivity was spin-coated at the hole pattern on a cladding to form a film having a thickness of 50 µm by a spin coat process. Ultraviolet ray was irradiated at only parts which would become cores, thereby forming a core pattern having a width of 50 µm thus producing a core pattern for the first column and a part of a core pattern for the second column.

Subsequently, a cladding material was coated at the upper part of the core material to have a thickness of 75 µm and hardened. According to the above method, a hole pattern where each hole has an area of 50 x 50 µm and a depth of 80 µm was again formed, and then the holes were filled with a core material having a negative photosensitivity while the core material was spin-coated on the cladding to form a film having a thickness of 50 µm.

Ultraviolet ray was again irradiated on only the parts corresponding to cores, thereby forming the core pattern for the second column. A cladding material was coated on the whole product and hardened, thereby arranging reverse U-shaped cores three-dimensionally and staggered in 3 rows and 2 columns within the cladding on the temporary substrate, the area of each core being 50 x 50 µm. Subsequently, first, a reflection surface for the second column was formed by using a V-shaped blade of a particle size of No. 6000, and then similarly a reflection surface for the first column was formed.

Patterning was carried out after gold was deposited to cover the exposed cores. Thereafter, a real substrate was adhered to the product with an adhesive. Removing the temporary substrate and exposing the core end faces were carried out by a grinder, followed by making a polishing treatment.

An optical insertion loss of the U-shaped optical waveguides was measured in such a manner that light having a wavelength of 850 µm was entered through the polished surface by using a GI multimode fiber having a core diameter of 50 µm, and then reflected at the two reflection surfaces so as to make its direction conversion by two times, followed by outgoing through the same surface as a surface through which light entered, and the outgoing light being accepted by a SI multimode fiber having a core diameter of 200 µm. As a result, the optical insertion loss was 3 dB or less regardless of the columns, by which it was confirmed to be low in loss and high in uniformity within the substrate.

Subsequently, a resist for lift-off was coated on the polished surface so as to form an electrode pattern. Thereafter, a film of titanium/gold was formed by sputtering, and then metals other than those of the electrode pattern were removed thereby forming electrodes. After a resist for forming bumps was coated, a pattern for solder bumps was formed, followed by forming gold-tin solder bumps by an electrolytic plating. Thereafter, cutting into a chip was made by a dicing saw thereby producing a multichannel optical path changing device in which L-shaped optical waveguides are arranged staggered in 3 columns and 2 rows, having a distance of 250 µm between the columns and a distance of 125 µm between the rows.

### EXMAPLE 2

On a temporary substrate having a diameter of 4 inches and a thickness of 2 mm, a 200 µm thick film of fluorinated polyimide resin as a cladding material, a 50 µm thick film of fluorinated polyimide resin as a core material, a 75 µm thick film of the cladding material, a 50 µm thick film of the core material, and finally a 50 µm thick film of the cladding material were formed in the order mentioned.

Eight grooves each having a width of 50 µm were formed parallel with each other on it by a dicing saw in such a manner that the grooves of a 250 µm interval and the grooves of a 2 cm interval were alternately located. After it was hardened upon the grooves being filled with the core material, four grooves each having a width of 200 µm were formed to have an interval of 250 µm in such a manner as to intersect the above-mentioned grooves at right angles. Then, after providing an interval of 3 mm, four grooves each having a width of 200 µm were formed to have an interval of 250 µm.

Upon repeating these operations, totaled 32 grooves were formed. The grooves were filled with the cladding material, followed by hardening the cladding material. Subsequently, first a reflection surface for the second column was formed by using a V-shaped blade of a particle size of No. 6000, and then a reflection surface for the first column was similarly formed, thereby producing 16 sets of 3 rows and 2 columns reverse U-shaped optical waveguides three-dimensionally arranged on the temporary substrate in such a manner that two reverse U-shaped cores each having a core area of 50 x 50 µm and a length of about 2 cm intersect each other at right angles at each row on the same plane.

After gold was deposited on the reflection surface to which the cores were exposed, a patterning was carried out. Thereafter, a real substrate was adhered to it with an adhesive. Removing the temporary substrate and exposing the end faces of the cores were made by using a grinder, and then a polishing treatment was made. Subsequently, a resist for lift-off was coated on the polished surface thereby forming an electrode pattern. Thereafter, a film of titanium/gold was formed, followed by removing the metals other than those of the electrode pattern thereby forming electrodes.

After a resist for forming bumps was coated, cutting into a chip was made by a dicing saw thereby producing a multichannel optical path changing device in which 3 columns and 2 rows L-shaped optical waveguides are three-dimensionally arranged in such a manner as to intersect each other at right angles at each row on the same plane, having a distance of 250 µm between the columns and a distance of 125 µm between the rows.

An optical insertion loss of the L-shaped optical waveguides was measured in such a manner that light having a wavelength of 850 µm entered through the upper surface of the device by using a GI multimode fiber having a core diameter of 50 µm, and then reflected once at the reflection surface so as to make its direction conversion once, followed by outgoing through the side surface of the device, and the outgoing light being accepted by a SI multimode fiber having a core diameter of 200 µm. As a result, the optical insertion loss was 2 dB or less regardless of the columns, by which it was confirmed to be low in loss and high in uniformity within the substrate.

### (comparative example)

The same operations as those in Example 2 were conducted with the exception that the thickness of the cladding layer between the core layer and the core layer was changed from 75 µm to 200 µm in the step for forming the films of the cladding material and the core material on the temporary substrate in Example 2 and that the reflection surface for the first and second columns was produced at one time in the step for producing the reflection surface, thereby producing a multichannel optical path changing device in which 3 columns and 2 rows optical waveguides are three-dimensionally arranged in such a manner that two cores intersected each other at right angles on the same plane at each row, having a distance of 250 µm between the columns and a distance of 250 µm between the rows.

An optical insertion loss of the L-shaped optical waveguides was measured in such a manner that light having a wavelength of 850 µm was entered through the upper surface of the device by using a GI multimode fiber having a core diameter of 50 µm, and then reflected once at the reflection surface so as to make its direction conversion once, followed by outgoing through the side surface of the device, and the outgoing light being accepted by a SI multimode fiber having a core diameter of 200 µm. As a result, although the optical insertion loss was 2 dB or less at some columns, there were columns at which the optical insertion loss was 3 dB or less, so that it was difficult to raise a uniformity.

### EXPLANATION OF REFERNECE

- 1: a L-shaped optical waveguide at a first column
- 2: a L-shaped optical waveguide at a second column
- 3: a reflection surface at a second column
- 4: a reflection surface at a first column
- 5: a core interval between adjacent two columns at a light-incident end surface light-outgoing
- 6: a core interval between adjacent two columns at a end surface
- 7: an optical path conversion angle
- 8: a reflection surface of a single plane
- 9: a dummy L-shaped core
- 10: a 3 rows and 1 column arranged vertical cavity surface element emitting
- 11: an electrode
- 12: a 3 rows and 2 columns arrayed vertical cavity surface element emitting
- 13: a 3 rows and 2 columns arrayed photo acceptance element
- 14: a U-shaped optical waveguide at a first column
- 15: a solder bump
- 16: a hole pattern
- 17: a cladding material
- 18: a temporary substrate
- 19: a core material
- 20: a reverse U-shaped core at a first column
- 21: a reverse U-shaped core at a second column
- 22: a second core exposed to a reflection surface
- 23: a metal
- 24: a real substrate
- 25: an adhesive
- 26: a groove

## Claims

1. A multichannel optical waveguide device **characterized by** comprising: a structure including a cladding and having a light-incident end surface, a light-outgoing end surface, and a plurality of flat reflection surfaces located parallel with each other; and L-shaped cores embedded in the cladding, the L-shaped cores being three-dimensionally arranged parallel with each other in m rows and n columns (where m and n are 2 or more), each L-shaped core having end faces which are exposed respectively to the light-incident end surface and the light-outgoing end surface, m number of the L-shaped cores in each column guiding light from the light-incident end surface to the light-outgoing end surface by changing direction of light on n number of the flat reflection surfaces, wherein an interval between the two adjacent cores on the light-incoming end surface is different from an interval between the two adjacent cores on the light-outgoing end surface, the two adjacent cores on the light-incoming end surface respectively corresponding to the two adjacent cores on the light-outgoing end surface.

2. A multichannel optical waveguide device as claimed in Claim 1, **characterized in that** the direction of light is changed at an optical path changing angle of 90° on each reflection surface.

3. A multichannel optical waveguide device as claimed in Claim 1 or 2, **characterized in that** the core end faces for a column and the core end faces for another column are offset from each other so as to be arranged staggered on the light-incident end surface and the light-outgoing end surface.

4. A multichannel optical waveguide device as claimed in Claims 1 to 3, **characterized in that** n number of the L-shaped cores at each row are arranged on a plane perpendicular to each reflection surface and intersect each other.

5. A multichannel optical waveguide device as claimed in Claims 1 to 4, **characterized in that** a metallic pattern is formed at least one of the light-outgoing end surface and the light-incident end surface.

6. A multichannel optical waveguide device as claimed in Claims 1 to 5, **characterized by** further comprising another multichannel optical waveguide device which is in mirror image relationship to the multichannel optical waveguide device, the multichannel optical waveguide devices being connected with each other by waveguides whose cores are two-dimensionally arranged.

7. A multichannel optical waveguide device as claimed in Claims 1 to 6, **characterized by** further comprising another multichannel optical waveguide, the multichannel optical waveguide devices being connected with each other by waveguides whose cores are two-dimensionally arranged.

8. A method of producing a multichannel optical waveguide device as claimed in Claims 1 to 7, **characterized by** comprising a step of producing reverse U-shaped or reverse L-shaped cores which are three-dimensionally arranged on a temporary substrate, and a step of forming a reflection surface at each of m rows.
